(19) **Europäisches Patentamt / European Patent Office / Office européen des brevets**

(11) **EP 1 942 159 A1**

(12) ## EUROPEAN PATENT APPLICATION

(43) Date of publication:
**09.07.2008 Bulletin 2008/28**

(51) Int Cl.:
*C09D 11/00* (2006.01)    *C09D 11/10* (2006.01)

(21) Application number: **07024545.1**

(22) Date of filing: **18.12.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS** | (72) Inventors:<br>• **Oyanagi, Takashi**<br>  **Suwa-shi**<br>  **Nagano-ken 392-8502 (JP)**<br>• **Nakano, Keitaro**<br>  **Suwa-shi**<br>  **Nagano-ken 392-8502 (JP)**<br>• **Takemoto, Kiyohiko**<br>  **Suwa-shi**<br>  **Nagano-ken 392-8502 (JP)** |
| (30) Priority: **19.12.2006 JP 2006341809**<br>            **17.08.2007 JP 2007212843** | |
| (71) Applicant: **Seiko Epson Corporation**<br>**Shinjuku-ku**<br>**Tokyo 163-0811 (JP)** | (74) Representative: **Grünecker, Kinkeldey, Stockmair & Schwanhäusser Anwaltssozietät**<br>**Leopoldstrasse 4**<br>**80802 München (DE)** |

(54) **Two-part curable ink composition set and ink jet recording method, ink jet recording apparatus, and printed product using the same**

(57)    A two-part curable ink composition set includes an ink composition A which contains at least a photo-radical polymerization initiator and a radically polymerizable compound and which does not contain a coloring material, and an ink composition B which contains at least a coloring material and a radically polymerizable compound and which does not contain a photo-radical polymerization initiator, wherein either one or each of the ink composition A and the ink composition B contains a resin emulsion dispersed in the radically polymerizable compound.

**EP 1 942 159 A1**

**Description**

BACKGROUND

1. Technical Field

The present invention relates to a curable ink composition that is cured by light. More particularly, the invention relates to a two-part curable ink composition set having excellent curability and fixability, an ink jet recording method, an ink jet recording apparatus, and a printed product using the same.

2. Related Art

An ink jet recording method is a printing method in which droplets of an ink composition are ejected and deposited on a recording medium, such as paper. The ink jet recording method is characterized in that images having high resolution and high quality can be printed at high speed. Usually, the ink composition used in the ink jet recording method includes an aqueous solvent as a main component, a coloring component, and a humectant, such as glycerol, for preventing clogging.
On the other hand, in the case where printing is performed on recording media into which an aqueous ink composition hardly permeates, such as some kinds of paper, e.g., coated paper and book printing paper, and cloth, or recording media into which an aqueous ink composition does not permeate, such as plates and films made of metal or plastic, e.g., a phenol, melamine, vinyl chloride, acrylic, or polycarbonate resin, an ink composition is required to have a property that a coloring material can be fixed onto the recording media stably. Under these circumstances, curable ink jet inks having excellent fixability have come to be used, the curable ink jet inks each containing a coloring material, a curing agent (radically polymerizable compound), and a (photo-radical) polymerization initiator.
Recently, applications of such curable ink jet inks have been expanded to include fabrication of color filters, printing on printed-circuit boards, printing on plastic cards, vinyl sheets, and plastic components, printing on large billboards, printing for outdoor/indoor advertisement, printing of bar codes and dates, and the like. Accordingly, further improvements in the properties, such as fixability, durability, abrasion resistance, and curability, of such inks are desired.
In order to improve the properties, such as fixability, durability, abrasion resistance, curability, and shielding property, of curable ink jet inks, techniques have been proposed in which polymer fine particles are incorporated in ink compositions. As one example thereof, a water-based ink composition containing polymer nanoparticles and a thermosetting or radiation-curable binder has been disclosed (for example, refer to JP-A-2004-250659). The claimed advantage is that by using such an ink composition, the durability of a printed product can be improved.
A water-based ink jet ink containing water-miscible resin fine particles and a water-soluble ultraviolet-curable humectant has also been disclosed (for example, refer to JP-A-2005-23299). In a water-based ink composition containing polymer fine particles, when ink is jetted through nozzles, water partially or fully evaporates from the ink such that the remaining polymer fine particles are accumulated in the nozzles, thus leading to irreversible clogging of the nozzles. However, according to the above-mentioned technique, by incorporating a humectant in the ink, clogging of the nozzles can be prevented or eliminated.
An ink jet ink composition has also been disclosed which contains an aqueous dispersion liquid of a radiation-curable polymer binder in which reaction can be initiated by radiation irradiation, a liquid medium, and a colorant (for example, refer to JP-A-2005-290362). According to this technique, fixability can be improved, and by using a radiation-curable polymer binder, it is possible to suppress an increase in the ink viscosity due to addition of a polymer, thereby preventing the hindrance to ink ejection.
An ink jet ink composition has also been disclosed which contains a colorant, a liquid medium, a polymer binder (which contains at least one polymer composition, the polymer composition being crosslinked and insoluble in radiation-curable monomers, radiation-curable prepolymers, radiation-curable oligomers, and mixtures thereof) (for example, refer to JP-A-2005-314655). According to this technique, fixability can be improved, and since the polymer binder is crosslinked and insoluble, it is possible to suppress an increase in the ink viscosity due to addition of a polymer.
When resin fine particles are incorporated in a water-based ultraviolet-curable ink composition and when the ink contains a liquid, such as water, that does not polymerize, it is difficult to use the ink composition on a recording medium that does not have an ink-accepting layer. Consequently, a step of volatilizing moisture is inevitably required before curing reaction. Similarly, in an ink composition which contains a non-polymerizable organic solvent, it is necessary to remove the component that is not involved in curing reaction. Therefore, desirably, such components are not included in the ink composition.
In a thermal ink jet head, a component, such as water or a non-polymerizable organic solvent, that forms bubbles by means of heat, is inevitably required. In addition, heat is applied to a combustible material, such as a polymerizable compound, which is not desirable in view of safety. In contrast, in an ink jet head that uses a piezoelectric actuator, since bubble formation by heating is not required, it is not necessary to incorporate a solvent such as the one described above into ink, and thus use of an ultraviolet-curable ink composition is more preferable.

The resin fine particles can be dispersed in an ink by mixing an emulsion or suspension containing the resin fine particles (hereinafter simply referred to as "resin emulsion" without distinguishing between emulsion and suspension) with other ink components. In order to produce a resin emulsion, a method is generally used in which a polymerizable compound is formed into fine particles in water by suspension polymerization, emulsion polymerization, microemulsion polymerization, or the like, followed by insolubilization in water. The resin emulsion is inevitably obtained as a water-based dispersion. It is not desirable to use the water-based dispersion as a raw material for an ink composition because moisture is mixed into the ink composition. Although it is conceivable to carry out the polymerization reaction in a non-polymerizable organic solvent, the component that is not involved in curing reaction is mixed into the ink composition. Consequently, most preferably, a resin emulsion dispersed in a polymerizable compound is used as disclosed in the invention. Accordingly, it is necessary to displace the disperse system of the resin emulsion dispersed in water or a non-polymerizable organic solvent with a polymerizable compound. However, usual polymerizable compounds are often polymerized by energy, such as heat or light, during a displacement process, resulting in problems, such as gelation.

The present inventors have found the fact that when solvent displacement of a disperse system is performed using a polymerizable compound (e.g., ethylene glycol monoallyl ether) that has a polymerizable functional group but is not radically polymerized alone, it is possible to prevent a reaction, such as gelation, and have found that it is possible to obtain an ink composition which only contains components required for curing reaction. It has also been found that heating treatment before curing reaction can be eliminated even on a recording medium which is not provided with an ink-accepting layer.

SUMMARY

An advantage of some aspects of the invention is that the invention provides a two-part curable ink composition set having excellent image curability and fixability, and an ink jet recording method, an ink jet recording apparatus, and a printed product using the same. The invention is as follows.

(1) A two-part curable ink composition set including an ink composition A which contains at least a photopolymerization initiator and a polymerizable compound and which does not contain a coloring material, and an ink composition B which contains at least a coloring material and a polymerizable compound and which does not contain a photopolymerization initiator, wherein either one or each of the ink composition A and the ink composition B contains a resin emulsion dispersed in the polymerizable compound.

(2) The two-part curable ink composition set described above in (1), wherein each of the ink composition A and the ink composition B does not contain water.

(3) The two-part curable ink composition set described above in (1) or (2), wherein the resin emulsion is an emulsion of a resin having a polymerizable group.

(4) The two-part curable ink composition set described above in any one of (1) to (3), wherein the ink composition A and/or the ink composition B contains, as the polymerizable compound, an allyl group-containing compound and/or an N-vinyl compound.

(5) The two-part curable ink composition set described above in (4), wherein the amount of the allyl group-containing compound and/or the N-vinyl compound contained in the ink composition A and/or the ink composition B is in a range of 20% to 80% by weight.

(6) The two-part curable ink composition set described above in (4) or (5), wherein the allyl group-containing compound is ethylene glycol monoallyl ether.

(7) The two-part curable ink composition set described above in (4) or (5), wherein the N-vinyl compound is N-vinylformamide.

(8) The two-part curable ink composition set described above in any one of (1) to (7), wherein the ink composition A and/or the ink composition B contains, as the polymerizable compound, a dendritic polymer.

(9) The two-part curable ink composition set described above in (8), wherein the dendritic polymer is a dendrimer and/or a hyperbranched polymer.

(10) The two-part curable ink composition set described above in (8) or (9), wherein the content of the dendritic polymer is 3% to 30% by weight.

(11) The two-part curable ink composition set described above in any one of (1) to (10), wherein the ink composition A and/or the ink composition B contains a surfactant.

(12) The two-part curable ink composition set described above in (11), wherein the surfactant is polyether-modified polydimethylsiloxane or polyester-modified polydimethylsiloxane.

(13) The two-part curable ink composition set described above in any one of (1) to (12), wherein the ink composition A and/or the ink composition B contains a polymerization accelerator.

(14) The two-part curable ink composition set described above in (13), wherein the polymerization accelerator is at least one of an amine compound, thioxanthone, and polymerizable fine particles.

(15) The two-part curable ink composition set described above in any one of (1) to (14), wherein the photopolymerization initiator contained in the ink composition A is any one of α-aminoketone, α-hydroxyketone, and acylphosphine oxide.

(16) The two-part curable ink composition set described above in any one of (1) to (14), wherein the photopolymerization initiator contained in the ink composition A is a mixture of at least two of α-aminoketone, α-hydroxyketone, and acylphosphine oxide.

(17) The two-part curable ink composition set described above in any one of (1) to (16), wherein the ink composition A and/or the ink composition B contains a thermal radical polymerization inhibitor.

(18) The two-part curable ink composition set described above in (17), wherein the thermal polymerization inhibitor is an HALS-based compound.

(19) The two-part curable ink composition set described above in any one of (1) to (18), wherein the coloring material contained in the ink composition B is a pigment.

(20) An ink jet recording method using the two-part curable ink composition set described above in any one of (1) to (19).

DESCRIPTION OF EXEMPLARY EMBODIMENTS

The invention can provide a two-part curable ink composition set having excellent curability and fixability. The two-part curable ink composition set according to any of the embodiments of the invention is suitable for an ink jet recording method and can be used in an ink jet recording apparatus.

Two-part curable ink composition sets according to embodiments of the invention will be described in detail below.

A two-part curable ink composition set according to an embodiment of the invention includes an ink composition A which contains at least a photo-radical polymerization initiator and a radically polymerizable compound and which does not contain a coloring material, and an ink composition B which contains at least a coloring material and a radically polymerizable compound and which does not contain a photo-radical polymerization initiator, wherein either one or each of the ink composition A and the ink composition B contains a resin emulsion dispersed in the radically polymerizable compound. Preferably, the two-part curable ink composition set does not contain water.

In order to disperse resin fine particles in an ink, use of a resin emulsion is effective. A resin emulsion is generally produced by a method in which a polymerizable compound is formed into fine particles in water by suspension polymerization, emulsion polymerization, microemulsion polymerization, or the like, followed by insolubilization in water. The resin emulsion is inevitably obtained as a water-based dispersion.

Examples of the resin fine particles obtained by polymerization of the polymerizable compound include fine particles of copolymers, such as styrene, acrylic, vinyl, epoxy, polyamide, polyester, and styrene-acrylic copolymers. Examples of the copolymers include a random copolymer and a block copolymer in which two or more different monomers are polymerized. The resulting resin is not particularly limited, but preferably is the same material as that of a recording medium from the standpoints of fixability on the recording medium or durability, abrasion resistance, and the like of the printed product.

The random copolymer is obtained by polymerizing a mixture of two or more different monomers, for example, a monomer A and a monomer B, in which monomer units are randomly arrayed, in such a manner as in -ABBABBBAAABA-. The block copolymer is, for example, obtained by polymerizing an oligomer AAA in which monomers A are polymerized and an oligomer BBBB in which monomers B are polymerized so as to have such a structure as -AAABBBBAAABBBB-.

The fine particles of the resin preferably have a polymerizable group on the surface thereof. Consequently, the resin is preferably a compound having a polymerizable group, such as an acrylic group, a methacrylic group, an epoxy group, or a vinyl group, at the molecular end or at the side chain. Thereby, it becomes possible for the fine particles to be polymerized with the radically polymerizable compound by exposure to light or to bond to other components in the ink, resulting in improvement in the durability, abrasion resistance, and the like of the printed product.

Various water-based resin emulsions in which the resin fine particles are dispersed are commercially available, and any of them can be used. In such a case, since it is not desirable to incorporate water in the curable ink composition as described above, the disperse system is preferably subjected to solvent displacement.

That is, the inventors have found that when solvent displacement of a disperse system is performed using a polymerizable compound (e.g., ethylene glycol monoallyl ether) that has a polymerizable functional group but is not polymerized alone, it is possible to prevent a reaction, such as gelation. The solvent displacement can be easily performed by a method using a commercially available rotary evaporator or a separation method using a difference in boiling point, such as steam distillation or distillation under reduced pressure. By mixing the resin emulsion obtained by the solvent displacement and other ink components, it is possible to obtain an ink composition which contains dispersed resin fine particles and which does not contain a component not required for curing reaction. Although this ink composition includes resin fine particles, since the fine particles are not dissolved in a solvent, it is possible to suppress an increase in the viscosity due to addition of a polymer. Furthermore, since the ink composition does not contain a component not required for curing reaction, it is possible to eliminate heating treatment before curing reaction even on a recording medium which is not provided with an ink-accepting layer.

Moreover, because of an absence of a component not required for curing reaction, the curable ink composition according to the embodiment of the invention is more suitable for an ink jet recording apparatus provided with an ink jet head using a piezoelectric actuator than that provided with a thermal ink jet head.

A non-aqueous curable resin emulsion may be used instead of a water-based resin emulsion. In order to produce a non-aqueous curable resin emulsion, a method is known in which a solution of a polymer to be emulsified is added to a non-aqueous organic solvent that does not dissolve polymer, followed by mixing and dispersion to form fine particles. Examples of the non-aqueous curable resin emulsion include Laromer LR 9023, PE 46 T, LR 8907, UA 19T, UA 9030 V, UA 9033V, LR 8987, UP 35D, and the like, which are manufactured by BASF Corporation. In the non-aqueous curable resin emulsion, the resin fine particles have polymerizable groups on the surface thereof. When the non-aqueous curable resin emulsion is used, it is not necessary to perform the solvent displacement.

The content of the resin emulsion in the ink composition is preferably 1% to 20% by weight, and more preferably 5% to 10% by weight. An excessive amount of the resin emulsion added may lead to discharge failure of ink droplets, whereas too little does not produce the effect of addition thereof. The resin emulsion is also preferable from the standpoint that the ink concentration can be reduced compared with a solvent-soluble resin.

The photo-radical polymerization initiator used in the ink composition A is not particularly limited, but is preferably $\alpha$-aminoketone, $\alpha$-hydroxyketone, or acylphosphine oxide. Examples such compounds include $\alpha$-hydroxyalkylphenone, $\alpha$-aminoalkylphenone, monoacylphosphine oxide, and bisacylphosphine oxide. $\alpha$-Aminoketone, $\alpha$-hydroxyketone, and acylphosphine oxide may be used alone or in combination of two or more.

It is also possible use photo-radical polymerization initiators available under the trade names of Irgacure 127, 184, 2959, 369, 379, 907, 1700, 1800, 1850, 1870, 819, and 4625, Darocur 1173, and TPO (manufactured by Ciba Specialty Chemicals Inc).

In the ink composition, the amount of the photo-radical polymerization initiator added is preferably 0.1% to 15% by weight, and more preferably 0.5% to 10% by weight. If the amount is too little, the rate of polymerization is decreased, and thus the effect of oxygen inhibition is increased, resulting in poor curing. If the amount is excessive, the molecular weight of the cured product becomes low, and a cured product having low durability only can be obtained.

The ink composition A and/or the ink composition B contains, as the radically polymerizable compound, an allyl group-containing compound and/or an N-vinyl compound.

The allyl group-containing compound is a compound which has an allyl group that does not polymerize alone and which has a 2-propenyl structure ($-CH_2CH=CH_2$). The 2-propenyl group, which is also referred to as an allyl group, is a trivial name according to the IUPAC nomenclature. Examples of the allyl group-containing compound include, in addition to the ethylene glycol monoallyl ether described above, allyl glycol (manufactured by Nippon Nyukazai Co., Ltd.); trimethylol propane diallyl ether, pentaerythritol triallyl ether, and glycerol monoallyl ether (manufactured by Daiso Co., Ltd.); and allyl group-containing polyoxyalkylene compounds under the trade names of UNIOX, UNILUB, POLYCERIN, and UNISAFE (manufactured by NOF Corporation).

As the allyl group-containing compound, an allyl ether compound is preferable. Examples of the allyl ether compound include ethylene glycol monoallyl ether, trimethylol propane diallyl ether, trimethylol propane monoallyl ether, glycerol monoallyl ether, allyl glycidyl ether, and pentaerythritol triallyl ether. Particularly preferred are ethylene glycol monoallyl ether and trimethylol propane diallyl ether, and most preferred is ethylene glycol monoallyl ether. As the N-vinyl compound, N-vinylformamide is preferable. These compounds may be used alone or in combination.

Ethylene glycol monoallyl ether and the N-vinyl compound are each a monofunctional radically polymerizable monomer with lower tendency of undesired polymerization due to dark reaction during storage, thus being suitable for use. In particular, the allyl ether compound, such as ethylene glycol monoallyl ether or trimethylol propane diallyl ether, is characterized in that it does not easily polymerize alone even in the presence of carbon radicals generated from decomposition of a photo-radical polymerization initiator, and does not form a polymer.

If the amount of the allyl group-containing compound and/or the N-vinyl compound added is less than 20% by weight, problems may occur with respect to the viscosity, dispersion stability, preservation stability, etc. of the ink composition. If the amount exceeds 80% by weight, the curability of the two-part curable ink composition and film strength may become insufficient. Therefore, the amount of the allyl group-containing compound and/or the N-vinyl compound added is preferably 20% to 80% by weight, and more preferably about 20% to 70% by weight.

In some cases, the ink composition A and/or the ink composition B may contain, as the radically polymerizable compound, a dendritic polymer. Dendritic polymers are roughly classified into six structures as shown below.

I Dendrimer

II Linear-dendritic polymer
III Dendrigraft polymer
IV Hyperbranched polymer
V Star-hyperbranched polymer
VI Hypergraft polymer

Among these, I to III have a degree of branching (DB) of 1, and have a defect-free structure, while IV to VI have a random branched structure which may contain defects. In particular, in the dendrimer, reactive functional groups can be arranged on the outermost surface thereof at high density and in a concentrated manner, compared with a linear polymer generally used. Thus, the dendrimer is highly expected as a functional polymer material. In the hyperbranched polymer, many reactive functional groups can be introduced into the outermost surface thereof, although the number of reactive functional groups introduced is lower than that of the dendrimer, and the hyperbranched polymer has excellent curability.
The degree of branching is given by the expression:

$$DB = (D + T)/(D + T + L)$$

wherein D is the number of dentritic units in the polymer, L is the number of linear units in the polymer, and T is the number of terminal units in the polymer.
In case the polymer does not have any defects, the polymer only comprises dentritic units D and terminal units T, but no linear units L, resulting in a defect-free polymer with a DB of 1.
The degree of branching may be determined via measurement of the polymer structure by NMR spectroscopy.
These dendritic polymers have repeated three-dimensionally branched structures and are highly branched, unlike known linear polymers and branched polymers. Therefore, it is possible to reduce viscosity compared with linear polymers having the same molecular weight.
Examples of the synthesis method for the dendrimer used in the invention include a divergent method in which synthesis proceeds outward from the center and a convergent method in which synthesis proceeds inward from the edge.
The dendrimer or hyperbranched polymer used in the invention is solid at room temperature and has a number-average molecular weight preferably in a range of 1,000 to 100,000, and more preferably in a range of 2,000 to 50,000. When the molecular weight is lower than the above-mentioned range, a fixed image becomes brittle. When the molecular weight is higher than the above-mentioned range, the viscosity of the ink increases excessively even if the amount added is decreased, thus being impractical in view of discharging properties.
Preferably, the dendrimer and/or hyperbranched polymer used in the invention is a dendrimer and/or hyperbranched polymer having radically polymerizable functional groups on the outermost surface thereof. The radically polymerizable structure on the outermost surface allows polymerization reaction to rapidly proceed.
Examples of the polymer having the dendrimer structure include amidoamine-based dendrimers, such as ones disclosed in U.S. Patent Nos. 4,507,466, 4,558,120, 4,568,737, 4,587,329, 4,631,337, and 4,694,064; and phenyl ether-based dendrimers, such as ones disclosed in U.S. Patent No. 5,041,516, Journal of American Chemistry 112, 1990, 7638-7647, and the like. As the amidoamine-based dendrimer, a dendrimer having a terminal amino group and a methyl carboxylate group is commercially available from Aldrich Inc. under the name "Starburst™ (PAMAM)". Furthermore, it is also possible to allow the terminal amino group of the amidoamine-based dendrimer to react with various acrylic acid derivatives and methacrylic acid derivatives to synthesize amidoamine-based dendrimers having corresponding ends, and to use them.
Examples of the acrylic acid derivatives and methacrylic acid derivatives that can be used include, but are not limited to, acrylic or methacrylic acid alkyl esters, such as methyl, ethyl, n-butyl, tert-butyl, cyclohexyl, palmityl, and stearyl esters; and acrylic or methacrylic acid alkylamides, such as acrylic acid amide and isopropylamide.
With respect to the phenyl ether-based dendrimers, various dendrimers are described in Journal of American Chemistry 112, 1990, 7638-7647. For example, it is described that 3,5-dihydroxybenzyl alcohol is allowed to react with 3,5-diphenoxybenzyl bromide to synthesize second-generation benzyl alcohol, an OH group of which is converted to Br using $CBr_4$ and triphenylphosphine, followed by similar reaction with 3,5-dihydroxybenzyl alcohol to synthesize next-generation benzyl alcohol, and the above-mentioned reactions are repeated to synthesize a desired dendrimer. In the phenyl ether-based dendrimers, the terminal benzyl ether bonds may be replaced with terminal groups having various chemical structures. For example, in the synthesis of the dendrimer described in Journal of American Chemistry 112, 1990, 7638-7647, when various alkyl halides are used in place of the above-mentioned benzyl bromide, phenyl ether-based dendrimers having terminal structures with corresponding alkyl groups can be obtained. In addition, polyamine dendrimers described in Macromol. Symp. 77, 21 (1994) and derivatives thereof whose terminal groups are modified may be used.

As the hyperbranched polymer, for example, hyperbranched polyethylene glycol or the like can be used. A hyperbranched polymer is obtained by synthesizing a target polymer in one step using a monomer having, in its molecule, two or more reactive sites of one type corresponding to branch portions and only one reactive site of another type corresponding to a connecting portion (refer to Macromolecules, 29, 1996, 3831-3838. An example of the hyperbranched polymer is a 3,5-dihydroxybenzoic acid derivative. In a production example of a hyperbranched polymer, poly[bis(triethylene glycol)benzoate], which is a hyperbranched polymer, can be synthesized by heating methyl 3,5-bis((8'-hydroxy-3',6'-dioxaoctyl)oxy)benzoate, which is a hydrolyzate of methyl 3,5-bis((8'-(tert-butyldiphenylsiloxy)-3',6'-dioxaoctyl)oxy) benzoate obtained from 1-bromo-8-(tert-butyldiphenylsiloxy)-3,6-dioxaoctane and methyl 3,5-dihydroxybenzoate, together with dibutyltin diacetate under a nitrogen atmosphere.

When 3,5-dihydroxybenzoic acid is used, the terminal group of the hyperbranched polymer is a hydroxyl group. Accordingly, hyperbranched polymers having various terminal groups can be synthesized by using appropriate alkyl halides for the hydroxyl group.

In a monodisperse polymer with a dendrimer structure or a hyperbranched polymer, properties depend on the chemical structure of the main chain and the chemical structure of the terminal group. In particular, the properties largely depend on a terminal group or a substituent group in the chemical structure. In particular, one having a polymerizable group at the terminal has a high gelation effect after photoreaction because of its reactivity and is thus useful. A polymerizable group-containing dendrimer is obtained by chemically modifying a terminal having a basic atomic group, such as an amino group, a substituted amino group, or a hydroxyl group, with a polymerizable group-containing compound.

For example, a polymerizable group-containing dendrimer is synthesized by adding, for example, an isocyanate group-containing vinyl compound to a polyfunctional compound obtained by Michael addition of an active hydrogen-containing (meth)acrylate-based compound to an amino-based dendrimer. Furthermore, for example, (meth)acrylic acid chloride or the like is allowed to react with an amino-based dendrimer, thereby obtaining a dendrimer having a polymerizable group at an end. Vinyl compounds which give such polymerizable groups include a compound having a radically polymerizable ethylenically unsaturated bond, and examples thereof include unsaturated carboxylic acids, such as acrylic acid, methacrylic acid, itaconic acid, crotonic acid, isocrotonic acid, and maleic acid, and salts thereof; and various radically polymerizable ethylenically unsaturated bond-containing compounds which will be described later.

The dendrimer or the hyperbranched polymer may be used alone or in combination with another dendrimer or hyperbranched polymer.

In the ink composition A and/or the ink composition B in the two-part curable ink composition set according to the embodiment of the invention, the amount of the dendritic polymer added is preferably in a range of about 3% to 30% by weight so that it is possible to maintain suitable properties required for the two-part curable ink composition set. More preferably, the amount is in a range of about 5% to 25% by weight. When the amount of the dendritic polymer added is less than 3% by weight, curability of the two-part curable ink composition set is insufficient. When the amount exceeds 30% by weight, problems may arise in the viscosity, dispersion stability, preservation stability, etc. of the ink composition in some cases.

The ink composition A and/or the ink composition B in the two-part curable ink composition set according to the embodiment of the invention may contain another radically polymerizable compound. Examples of the another radically polymerizable compound include, but are not limited to, monomers.

A monomer is a molecule that can be a structural unit of a basic structure of a polymer. The monomer used in the invention is also referred to as a "photopolymerizable monomer" and includes a monofunctional monomer, a bifunctional monomer, and a polyfunctional monomer. Any of these can be used. Preferably, these monomers have a primary irritation index (PII) of 2 or less. The PII is according to the standard of Draize, OECD Guideline for the Testing of Chemicals (No. 404, 2002).

Examples of the monofunctional monomers, bifunctional monomers, and polyfunctional monomers having a PII of 2 or less are shown in Table 1 below.

Table 1

**Monofunctional monomer**

| Substance | Viscosity (mPa·s) | P.I.I. |
|---|---|---|
| (2-methyl-2-ethyl-1,3-dioxolan-4-yl)methyl acrylate (MEDOL-10, Osaka Organic Chemical Industry Ltd.) | 5.1 | 1.3 |
| (2-methyl-2-isobutyl-1,3-dioxolan-4-yl)methyl acrylate (MIBDOL-10, Osaka Organic Chemical Industry Ltd.) | 5.3 | 1.0 |
| Phenoxyethyl acrylate (Viscoat #192, Osaka Organic Chemical Industry Ltd.) | 3.3 | 1.7 |
| Isobonyl acrylate (IBXA, Osaka Organic Chemical Industry Ltd.) | 2.6 | 0.6 |

(continued)

**Monofunctional monomer**

| Substance | Viscosity (mPa·s) | P.I.I. |
|---|---|---|
| Methoxydiethylene glycol monoacrylate (Blemmer PME-100, NOF Corporation) | 2 | 0.7 |
| Acryloyl morpholine (ACMO, Kohjin Co., Ltd.) | 12 | 0.5 |

**Bifunctional monomer**

| Substance | Viscosity (mPa·s) | P.I.I. |
|---|---|---|
| Ethylene glycol dimethacrylate (Light-Ester EG, Kyoeisha Chemical Co., Ltd.) | 3 | 0.6 |
| Diethylene glycol dimethacrylate (Light-Ester 2EG, Kyoeisha Chemical Co., Ltd.) | 5 | 0.5 |
| Tripropylene glycol diacrylate (Aronix M-220, Toagosei Co., Ltd.) | 12 | 1.6 |
| 1,9-Nonanediol diacrylate (Viscoat #260, Osaka Organic Chemical Industry Ltd.) | 21 | 2.0 |
| Polyethylene glycol #400 diacrylate (NK Ester A400, Shin-Nakamura Chemical Co., Ltd.) | 58 | 0.4 |
| Tetraethylene glycol dimethacrylate (NK Ester 4G, Shin-Nakamura Chemical Co., Ltd.) | 14 | 0.5 |
| 1,6-Hexanediol dimethacrylate (NK Ester HD-N, Shin-Nakamura Chemical Co., Ltd.) | 6 | 0.5 |
| Neopentyl glycol dimethacrylate (NK Ester NPG, Shin-Nakamura Chemical Co., Ltd.) | 7 | 0.0 |
| 2-Hydroxy-1,3-dimethacryloxy propane (NK Ester 701, Shin-Nakamura Chemical Co., Ltd.) | 37 | 0.6 |
| 1,4-Butanediol dimethacrylate (BD, Shin-Nakamura Chemical Co., Ltd.) | 7 | 2.0 |

**Polyfunctional monomer**

| Substance | Viscosity (mPa·s) | P.I.I. |
|---|---|---|
| Trimethylolpropane trimethacrylate (NK Ester TMPT, Shin-Nakamura Chemical Co., Ltd.) | 42 | 0.8 |
| Trimethylolpropane modified triacrylate (Viscoat #360, Osaka Organic Chemical Industry Ltd.) | 55 | 1.5 |
| Trimethylolpropane PO-modified triacrylate (New Frontier TMP-3P, Dai-Ichi Kogyo Seiyaku Co., Ltd.) | 60 | 0.1 |
| Glycerol PO-modified triacrylate (Viscoat #GPT, Osaka Organic Chemical Industry Ltd.) | 75 | 0.8 |

The viscosity values shown in Table 1 are values measured at 25°C.

The two-part curable ink composition set according to the embodiment of the invention may contain an oligomer as a radically polymerizable compound, in addition to the above-mentioned monomers.

In the ink composition A which contains a photo-radical polymerization initiator and a radically polymerizable compound, when the radically polymerizable compound is a monofunctional radically polymerizable monomer, there is a low possibility that the radically polymerizable compound will react with the photo-radical polymerization initiator to cause undesired polymerization during storage. As the monofunctional monomer to be used, N-vinylformamide, ethylene glycol monoallyl ether, or the like is preferable.

The ink composition A and/or the ink composition B may contain a surfactant. For example, preferably, polyester-modified silicone or polyether-modified silicone is used as a silicone-based surfactant. In particular, polyether-modified polydimethylsiloxane or polyester-modified polydimethylsiloxane is preferably used. Specific examples thereof include BYK-347, BYK-348, BYK-UV3500, 3510, 3530, and 3570 (manufactured by BYK-Chemie Japan KK).

In the two-part curable ink composition set, the ink composition A and/or the ink composition B may contain a polymerization accelerator. The polymerization accelerator is not particularly limited, but preferably includes at least one of an amine compound, thioxanthone, and polymerizable fine particles. Examples thereof include Darocur EHA and EDB, which are aminobenzoates, (manufactured by Ciba Specialty Chemicals Inc.), thioxanthone, isopropyl thioxanthone, dimethyl thioxanthone, diethyl thioxanthone, and polymerizable fine particles having polymerizable functional groups introduced to the surface thereof. Preferably, the polymerization accelerator is contained in the ink composition A and/or the ink composition B in an amount of 0.01 to 1 percent by weight.

In the two-part curable ink composition set, the ink composition A and/or the ink composition B preferably contains a thermal radical polymerization inhibitor. In this case, the preservation stability of the ink composition is improved. As the thermal radical polymerization inhibitor, a thermal radical polymerization inhibitor that is mixed in commonly used polymerizable compositions can be used. Examples thereof include phenolic antioxidants, such as hindered phenol compounds; hindered amine light stabilizers (HALS); phosphorus-based antioxidants; hydroquinone monomethyl ether widely used for (meth)acrylic monomers; and others, such as hydroquinone, tert-butyl catechol, and pyrogallol. Preferably, a hindered phenol compound or an HALS-based compound is used. Preferably, the thermal radical polymerization inhibitor is contained in the ink composition A and/or the ink composition B in an amount of 0.01 to 1 percent by weight.

Examples of the hindered phenol compound include Irgastab UV-22 (manufactured by Ciba Specialty Chemicals Inc.), and examples of the HALS-based thermal radical polymerization inhibitor include Irgastab UV-10 (manufactured by Ciba Specialty Chemicals Inc).

In the two-part curable ink composition set, only the ink composition B contains a coloring material. The coloring material used is preferably a pigment in view of durability of a printed product. The pigment used in the present invention is not particularly limited, and any of inorganic pigments and organic pigments may be used.

Examples of the inorganic pigment that can be used include titanium oxide, iron oxide, and carbon black produced by a known method, such as a contact method, a furnace method, or a thermal method. Examples of the organic pigment that can be used include azo pigments (e.g., azo lake, insoluble azo pigments, condensed azo pigments, and chelate azo pigments); polycyclic pigments (e.g., phthalocyanine pigments, perylene pigments, perinone pigments, anthraquinone pigments, quinacridone pigments, dioxazine pigments, thioindigo pigments, isoindolinone pigments, and quinofuran pigments); dye chelates (e.g., basic dye chelates and acid dye chelates); nitro pigments; nitroso pigments; and aniline black.

Examples of carbon black pigments include C. I. Pigment Black 7; No. 2300, No. 900, MCF88, No. 33, No. 40, No. 45, No. 52, MA7, MA8, MA100, and No. 2200B manufactured by Mitsubishi Chemical Corporation; Raven 5750, 5250, 5000, 3500, 1255, and 700 manufactured by Columbia Chemical Company; Regal 400R, 330R, and 660R, Mogul L and 700, Monarch 800, 880, 900, 1000, 1100, 1300, and 1400 manufactured by Cabot Corporation; and Color Black FW1, FW2, FW2V, FW18, and FW200, Color Black S150, S160, and S170, Printex 35, U, V, and 140U, Special Black 6, 5, 4A, and 4 manufactured by Degussa Inc.

Examples of pigments used for yellow ink include C. I. Pigment Yellow 1, 2, 3, 12, 13, 14, 16, 17, 73, 74, 75, 83, 93, 95, 97, 98, 109, 110, 114, 120, 128, 129, 138, 139, 150, 151, 154, 155, 180, 185, and 213.

Examples of pigments used for magenta ink include C. I. Pigment Red 5, 7, 12, 48 (Ca), 48 (Mn), 57 (Ca), 57: 1, 112, 122, 123, 168, 184, 202, and 209, and C. I. Pigment Violet 19.

Examples of pigments used for cyan ink include C. I. Pigment Blue 1, 2, 3, 15:3, 15:4, 60, 16, and 22.

Examples of pigments used for white ink include titanium dioxide, calcium carbonate, calcium sulfate, zinc oxide, barium sulfate, barium carbonate, silica, alumina, kaolin, clay, talc, white clay, aluminum hydroxide, magnesium carbonate, and white hollow resin emulsions. Preferably, these pigments are used alone or as a mixture of two or more.

Examples of pigments that can be used for metallic ink include, but are not limited to, metal flakes obtained by preparing a composite pigment base in which a separation resin layer and a metal or metal compound layer are stacked in that order on a surface of a sheet-like substrate, separating the metal or metal compound layer from the sheet-like substrate at the interface between the metal or metal compound layer and the separation resin layer, followed by pulverization.

The metal or metal compound used for the metal or metal compound layer of the composite pigment base for producing the metal flakes is not particularly limited as long as it has metallic luster. Examples of the metal that can be used include aluminum, silver, gold, nickel, chromium, tin, zinc, indium, titanium, and copper. At least one of these elemental metals and alloys thereof is preferably used. In order to control the color tone of each color pigment, a plurality of color pigments may be mixed. For example, Pigment Black 7 and Pigment Blue 15:3 may be mixed for changing the color tone of reddish black to bluish black. In addition, a fluorescent brightening agent may be used.

According to a preferred embodiment of the invention, the average particle diameter of the inorganic or organic pigment is preferably in a range of 10 to 200 nm, and more preferably in a range of about 50 to 150 nm. As the metallic pigment, metal flakes having an average thickness of 30 to 100 nm, a 50% volume-average particle diameter of 1.0 to 4.0 $\mu$m, and a maximum particle diameter of 12 $\mu$m or less in a particle diameter distribution are preferred.

The amount of the coloring material added in the ink composition B is preferably in a range of about 0.1 % to 25% by weight, and more preferably in a range of about 0.5% to 15% by weight.

According to a preferred embodiment of the invention, the pigment may be used as a pigment dispersion liquid for the ink composition B, the pigment dispersion liquid being prepared by dispersing the pigment in an aqueous medium using a dispersant or a surfactant. As the dispersant, a dispersant commonly used for preparing pigment dispersion liquids, for example, a polymer dispersant, is preferably used.

In the case of the ink composition B which contains the coloring material, the ink composition may include a plurality of ink compositions for their respective colors. For example, when a deep color and a light color in the same series are added to each of the four basic colors of yellow, magenta, cyan, and black, light magenta and deep red are added to magenta, and light cyan, deep blue, and violet are added to cyan. Furthermore, medium colors, such as green and orange, may be added. Furthermore, grey and light black as light colors of black and matte black as a deep color may be added to black which is an achromatic color, and cream and ivory may be added to white which is an achromatic color. Furthermore, in metallic colors, silver, gold, copper, chrome silver, and the like may be added.

If required, other additives may be used, for example, a leveling agent; a matting agent; and a polyester resin, a polyurethane resin, a vinyl resin, an acrylic resin, a rubber-based resin, a polyacryl polyol resin, a polyoxyalkylene polyalkylene amine resin, or wax for controlling film physical properties. The ink composition A and/or the ink composition B may further contain other publicly known and used components that can be used for two-part curable inks, such as a humectant, a penetrating solvent, a pH adjuster, a preservative, and a fungicide.

The two-part curable ink composition set is subjected to curing reaction by light irradiation after the ink composition A and the ink composition B are mixed. The mixing may be performed before or after printing as long as it is performed before curing reaction. That is, in the mixing and printing, the ink composition A and the ink composition B may be allowed to adhere to the same position on a recording medium, or a mixture of the ink composition A and the ink composition B may be allowed to adhere to a recording medium.

An ink jet recording method using the two-part curable ink composition set according to any of the embodiments of the invention preferably includes ejecting the ink compositions to a recording medium and then irradiating the ink compositions with ultraviolet light.

The irradiation light source is not particularly limited, but light at a wavelength of 350 to 450 nm is preferred as the irradiation light source. The ultraviolet exposure is in a range of 10 to 20,000 mJ/cm$^2$, and preferably in a range of 50 to 15,000 mJ/cm$^2$. If the ultraviolet exposure is within the range described above, the curing reaction can be carried out satisfactorily.

Examples of the lamp for ultraviolet irradiation include a metal halide lamp, a xenon lamp, a carbon arc lamp, a chemical lamp, a low-pressure mercury-vapor lamp, and a high-pressure mercury-vapor lamp. For example, a commercially available lamp, such as an H lamp, D lamp, or V lamp manufactured by Fusion System Corporation, may be used. Furthermore, the ultraviolet irradiation may be performed using an ultraviolet light-emitting semiconductor device, such as an ultraviolet light-emitting diode (ultraviolet LED) or an ultraviolet light-emitting semiconductor laser.

By using an ink jet recording apparatus provided with the two-part curable ink composition set according to any of the embodiments of the invention, desired recording can be performed on a recording medium.

Furthermore, by using the ink jet recording method and/or the ink jet recording apparatus, it is possible to form at least a portion of an image of a printed product. The material for the printed product is not particularly limited.

Examples

The invention will be described in detail on the basis of examples, but it is to be understood that the invention is not limited thereto.

Preparation of Pigment Dispersion Liquid

To 15% by weight of C. I. Pigment Black 7 (carbon black) as a colorant and 3.5% by weight of Discol N-509 (manufactured by Dainichiseika Color & Chemicals Mfg. Co., Ltd.) as a dispersant, ethylene glycol monoallyl ether (manufactured by Nippon Nyukazai Co., Ltd.; hereinafter abbreviated as "AG") as a monomer was added in an amount to make the total 100% by weight, followed by mixing under stirring to prepare a mixture. The mixture was subjected to dispersion treatment using a sand mill (manufactured by Yasukawa Seisakusho K.K.) together with zirconia beads (diameter: 1.5 mm) for 6 hours. Then, the zirconia beads were separated with a separator to obtain a black pigment dispersion liquid.

Similarly, pigment dispersion liquids corresponding to the individual colors, i.e., a cyan pigment dispersion liquid (C. I. Pigment Blue 15:3), a magenta pigment dispersion liquid (C. I. Pigment Violet-19), a yellow pigment dispersion liquid (C. I. Pigment Yellow-155), and a white pigment dispersion liquid (C. I. Pigment White 6), were prepared.

Preparations of Ink Compositions A1 to A6 and Ink Compositions B1 to B14

Ink compositions A1 to A6 were prepared with the components shown in Tables 2 to 11. That is, with respect to the monomer, the hyperbranched polymer, the photo-radical polymerization initiator, the polymerization accelerator, the surfactant, and the thermal radical polymerization inhibitor, the components shown in each Table were weighed and placed in a light-shielding container, followed by mixing and complete dissolution using a magnetic stirrer. Then, a predetermined amount of a resin emulsion (Polymer Emulsion) was added thereto, followed by mixing under stirring for 30 minutes. Each of the ink compositions A1 to A6 was filtrated through a 5-μm membrane filter to obtain a desired ink composition.

Ink compositions B1 to B14 were prepared with the components shown in Tables 2 to 11 and Tables 13 and 14 in the same manner as above. That is, with respect to the monomer, the hyperbranched polymer, the polymerization accelerator, the surfactant, and the thermal radical polymerization inhibitor, the components shown in each Table were weighed and placed in a light-shielding container, followed by mixing and complete dissolution using a magnetic stirrer. Then, a predetermined amount of a resin emulsion was added thereto, followed by mixing under stirring for 30 minutes.

Subsequently, the pigment dispersion liquid was gradually added dropwise to the solvent under stirring. After the addition was completed, the mixture was mixed by stirring at room temperature for one hour. Then, each of the ink compositions B1 to B14 was filtrated through a 5-μm membrane filter to obtain a desired ink composition. In each Table, numerical values are in terms of "percent by weight".

As the resin emulsion, Laromer PE 46 T, PE 22 WN, or UA 9029 V manufactured by BASF Corporation was used. The PE 46 T is a monomer dispersion-type UV curable resin emulsion and can be dispersed with a radically polymerizable compound, such as TPGDA described below. The PE 22 WN is a water dispersion-type UV curable resin emulsion and can be dispersed with water. The UA 9029 V is an organic solvent dispersion-type UV curable resin emulsion and can be dispersed with an organic solvent.

TPGDA (Tripropylene glycol diacrylate: Laromer TPGDA manufactured by BASF Corporation) shown in the tables below is a radically polymerizable group-containing monomer.

The ink compositions A6 and B10 respectively correspond to the ink compositions A2 and B2 in which PE 22 WN, which is a water dispersion-type UV curable resin emulsion, has been subjected to solvent displacement with ethylene glycol monoallyl ether (AG).

In the examples, as a hyperbranched polymer, "Viscoat #1000" or "STAR-501" manufactured by Osaka Organic Chemical Industry Ltd. was used. Each of the "Viscoat #1000" and "STAR-501" is a hyperbranched polymer produced by branching functional groups with dipentaerythritol being a core. The "Viscoat #1000" contains ethylene glycol diacrylate as a diluent monomer and has a viscosity of 273 mPa·s and a number of functional groups of 14 (acryl groups). The "STAR-501" contains dipentaerythritol hexaacrylate as a diluent monomer and has a viscosity of 210 mPa·s and a number of functional groups of 20 to 99 (acryl groups). Each of the "Viscoat #1000" and "STAR-501" has acryloyl groups on the outermost surface thereof and can be used suitably.

Furthermore, when a dendrimer which has high stereoregularity is used, the number of production steps is increased, resulting in an increase in the production cost. On the other hand, in a hyperbranched polymer, the stereoregularity is not so high as that of the dendrimer, and the hyperbranched polymer can be synthesized relatively easily, thus being advantageous in terms of cost.

Examples 1 to 11 and Comparative Example 1

The compositions of the two-part curable ink composition sets used in Examples 1 to 11 and Comparative Example 1 are shown in Tables 2 to 11 below.

Table 2

|  | Example 1 | | Example 2 | |
|---|---|---|---|---|
|  | Ink composition A1 | Ink composition B1 | Ink composition A1 | Ink composition B4 |
| AG | 73.6 | 70.6 | 73.6 | 78.6 |
| TPGDA | 3.0 | 3.0 | 3.0 | - |
| STAR-501 | 10.0 | 12.0 | 10.0 | 14.0 |
| Polymer Emulsion (PE 46 T) | 7.0 | 7.0 | 7.0 | - |
| Irgacure 819 | 4.0 | - | 4.0 | - |
| Irgacure 127 | 1.0 | - | 1.0 | - |
| Darocur EHA | 1.0 | 1.0 | 1.0 | 1.0 |
| Pigment (C. I. Pigment Bk7) | - | 6.0 | - | 6.0 |
| BYK-3570 | 0.2 | 0.2 | 0.2 | 0.2 |
| Irgastab UV-10 | 0.2 | 0.2 | 0.2 | 0.2 |

Table 3

| | Example 3 | | Comparative Example 1 | |
|---|---|---|---|---|
| | Ink composition A4 | Ink composition B1 | Ink composition A4 | Ink composition 84 |
| AG | 81.6 | 70.6 | 81.6 | 78.6 |
| TPGDA | - | 3.0 | - | - |
| STAR-501 | 12.0 | 12.0 | 12.0 | 14.0 |
| Polymer Emulsion (PE 46 T) | - | 7.0 | - | - |
| Irgacure 819 | 4.0 | - | 4.0 | - |
| Irgacure 127 | 1.0 | - | 1.0 | - |
| Darocur EHA | 1.0 | 1.0 | 1.0 | 1.0 |
| Pigment (C. I. Pigment Bk7) | - | 6.0 | - | 6.0 |
| BYK-3570 | 0.2 | 0.2 | 0.2 | 0.2 |
| Irgastab UV-10 | 0.2 | 0.2 | 0.2 | 0.2 |

Table 4

| | Example 4 | |
|---|---|---|
| | Ink composition A2 | Ink composition B2 |
| AG | 73.6 | 70.6 |
| STAR-501 | 10.0 | 12.0 |
| Polymer Emulsion (PE 22 WN) | 5.0 | 5.0 |
| Irgacure 819 | 4.0 | - |
| Irgacure 127 | 1.0 | - |
| Darocur EHA | 1:0 | 1.0 |
| Pigment (C. I. Pigment Bk7) | - | 6.0 |
| BYK-3570 | 0.2 | 0.2 |
| Irgastab UV-10 | 0.2 | 0.2 |
| Water | 5.0 | 5.0 |

Table 5

| | Example 5 | |
|---|---|---|
| | Ink composition A3 | Ink composition B3 |
| AG | 73.6 | 70.6 |
| STAR-501 | 10.0 | 12.0 |
| Polymer Emulsion (UA 9029 V) | 7.0 | 7.0 |
| Irgacure 819 | 4.0 | - |
| Irgacure 127 | 1.0 | - |
| Darocur EHA | 1.0 | 1.0 |

(continued)

| | Example 5 | |
|---|---|---|
| | Ink composition A3 | Ink composition B3 |
| Pigment (C. I. Pigment Bk7) | - | 6.0 |
| BYK-3570 | 0.2 | 0.2 |
| Irgastab UV-10 | 0.2 | 0.2 |
| Butyl acetate | 3.0 | 3.0 |

Table 6

| | Example 6 | |
|---|---|---|
| | Ink composition A1 | Ink composition B2 |
| AG | 73.6 | 70.6 |
| TPGDA | 3.0 | - |
| STAR-501 | 10.0 | 12.0 |
| Polymer Emulsion | 7.0 (PE 46 T) | 5.0 (PE 22 WN) |
| Irgacure 819 | 4.0 | - |
| Irgacure 127 | 1.0 | - |
| Darocur EHA | 1.0 | 1.0 |
| Pigment (C. I. Pigment Bk7) | - | 6.0 |
| BYK-3570 | 0.2 | 0.2 |
| Irgastab UV-10 | 0.2 | 0.2 |
| Water | - | 5.0 |

Table 7

| | Example 7 | |
|---|---|---|
| | Ink composition A1 | Ink composition B3 |
| AG | 73.6 | 70.6 |
| TPGDA | 3.0 | - |
| STAR-501 | 10.0 | 12.0 |
| Polymer Emulsion | 7.0 (PE 46 T) | 7.0 (UA 9029 V) |
| Irgacure 819 | 4.0 | - |
| Irgacure 127 | 1.0 | - |
| Darocur EHA | 1.0 | 1.0 |
| Pigment (C. I. Pigment Bk7) | - | 6.0 |
| BYK-3570 | 0.2 | 0.2 |
| Irgastab UV-10 | 0.2 | 0.2 |
| Butyl acetate | - | 3.0 |

Table 8

|  | Example 8 | |
| :---: | :---: | :---: |
|  | Ink composition A2 | Ink composition B1 |
| AG | 73.6 | 70.6 |
| TPGDA | - | 3.0 |
| STAR-501 | 10.0 | 12.0 |
| Polymer Emulsion | 5.0 (PE 22 WN) | 7.0 (PE 46 T) |
| Irgacure 819 | 4.0 | - |
| Irgacure 127 | 1.0 | - |
| Darocur EHA | 1.0 | 1.0 |
| Pigment (C. I. Pigment Bk7) | - | 6.0 |
| BYK-3570 | 0.2 | 0.2 |
| Irgastab UV-10 | 0.2 | 0.2 |
| Water | 5.0 | - |

Table 9

|  | Example 9 | |
| :---: | :---: | :---: |
|  | Ink composition A3 | Ink composition B1 |
| AG | 73.6 | 70.6 |
| TPGDA | - | 3.0 |
| STAR-501 | 10.0 | 12.0 |
| Polymer Emulsion | 7.0 (UA 9029 V) | 7.0 (PE 46 T) |
| Irgacure 819 | 4.0 | - |
| Irgacure 127 | 1.0 | - |
| Darocur EHA | 1.0 | 1.0 |
| Pigment (C. I. Pigment Bk7) | - | 6.0 |
| BYK-3570 | 0.2 | 0.2 |
| Irgastab UV-10 | 0.2 | 0.2 |
| Butyl acetate | 3.0 | - |

Table 10

|  | Example 10 | |
| :---: | :---: | :---: |
|  | Ink composition A5 | Ink composition B9 |
| AG | 67.6 | 71.6 |
| Viscoat #1000 | 20.0 | 15.0 |
| Polymer Emulsion | PE 46 T<br>7.0 | PE 46 T<br>7.0 |

(continued)

|  | Example 10 | |
|---|---|---|
|  | Ink composition A5 | Ink composition B9 |
| Irgacure 819 | 4.0 | - |
| Irgacure 127 | 1.0 | - |
| Pigment | -<br>- | C. I. Pigment Bk7<br>6.0 |
| BYK-3500 | 0.2 | 0.2 |
| Irgastab UV-10 | 0.2 | 0.2 |

Table 11

|  | Example 11 | |
|---|---|---|
|  | Ink composition A6 | Ink composition B10 |
| AG | 78.6 | 75.6 |
| STAR-501 | 10.0 | 12.0 |
| Polymer Emulsion (PE 22 WN) | 5.0 | 5.0 |
| Irgacure 819 | 4.0 | - |
| Irgacure 127 | 1.0 | - |
| Darocur EHA | 1.0 | 1.0 |
| C. I. Pigment Bk7 | - | 6.0 |
| BYK-3500 | 0.2 | 0.2 |
| Irgastab UV-10 | 0.2 | 0.2 |

Evaluation Methods

Curability Test 1

The ink composition A and the ink composition B as a two-part curable ink composition set prepared as described above for each of Examples and Comparative Example were added dropwise onto a glass substrate and then mixed to form a sample. By using the sample, curability of the two-part curable ink composition set was evaluated according to the procedures described below. An ultraviolet irradiation apparatus was fabricated using an ultraviolet light-emitting diode NICHIA i-LED "NCCU033" with a peak wavelength of 365 nm and an ultraviolet light-emitting diode NICHIA "NCCU001" with a peak wavelength of 380 nm (both manufactured by Nichia Corporation). The irradiation conditions of the ultraviolet irradiation apparatus were controlled such that the irradiation intensity at the irradiation surface at each of the wavelengths of 365 nm and 380 nm was 30 mW/cm$^2$, i.e., 60 mW/cm$^2$ in total. The sample was irradiated with ultraviolet light for 5 seconds so that the integrated quantity of light for each ultraviolet irradiation treatment was 300 mJ/cm$^2$. Then, bleeding of the two-part curable ink composition set was evaluated, and the image edge portion was visually evaluated on the basis of the criteria described below. The results thereof are shown in Table 12.

Bleeding Evaluation

AA: Bleeding does not occur when ink compositions are cured.

A: Bleeding occurs and uncured liquid oozes out, but the liquid is dried at room temperature within a period required for a printing process, thus causing no problem.

B: Bleeding occurs and uncured liquid oozes out, but the liquid is dried when left to stand for 15 minutes at room temperature.

C: Bleeding occurs, uncured liquid oozes out, and the liquid is not dried when left to stand for 15 minutes at room temperature.

Visual Evaluation of Image Edge Portion

AA: A boundary between printed and non-printed areas can be clearly distinguished.
A: Although coloring materials partially ooze out due to bleeding, a boundary between printed and non-printed areas can be distinguished, thus causing no problem.
B: Coloring materials ooze out due to bleeding, and a boundary between printed and non-printed areas becomes indistinct, thus causing a problem.
C: Coloring materials ooze out due to bleeding, and a boundary between printed and non-printed areas cannot be distinguished.

Fixability

Using an ink jet printer PM-G920 manufactured by Seiko Epson Corporation, the ink composition A1 was filled in a gloss optimizer cartridge, and each of the ink compositions B1 to B4 was filled in a matte black cartridge. As a recording medium, an A4-sized OHP film (XEROX FILM frameless; manufactured by Fuji Xerox Co., Ltd.) was used. Printing and curing treatment were performed, using the ultraviolet irradiation light source placed at the paper-ejecting port, under the curing conditions in which the integrated quantity of light was 900 mJ/cm$^2$. With respect to the resulting cured film, a tape peel test was performed using Cellotape (registered trademark) No. 405 manufactured by Nichiban Co., Ltd. Furthermore, the same test was performed by replacing the ink composition A1, one after another, with the ink compositions A2, A3, A4, A5, and A6 and using the ink compositions B9 and B10 instead of the ink compositions B1 to B4. The evaluation results are shown in Table 12.

Tape Peel Test

AA: No peeling occurs at the interface between the cured film and the film.
A: A part of the edge of the cured film adheres to the adhesive layer of the tape and is peeled off, but the fixability is at a usable level.
B: Peeling occurs at the interface between the cured film and the film, and most of the cured film adheres to the adhesive layer of the tape.
C: Peeling occurs at the interface between the cured film and the film, and all of the cured film adheres to the tape and is peeled off.
Table 12

| | Ink composition A | Ink composition B | Bleeding evaluation | Visual evaluation of image edge portion | Fixability evaluation |
|---|---|---|---|---|---|
| Example 1 | A1 | B1 | AA | AA | AA |
| Example 2 | A1 | B4 | AA | AA | AA |
| Example 3 | A4 | B1 | AA | AA | AA |
| Example 4 | A2 | B2 | B | B | A |
| Example 5 | A3 | B3 | A | A | A |
| Example 6 | A1 | B2 | B | A | A |
| Example 7 | A1 | B3 | A | A | A |
| Example 8 | A2 | B1 | B | A | A |
| Example 9 | A3 | B1 | A | A | A |
| Example 10 | A5 | B9 | AA | AA | AA |
| Example 11 | A6 | B10 | A | A | A |
| Comparative Example 1 | A4 | B4 | AA | A | C |

Curability Test 2

A set of color ink compositions shown in Table 13 below was used. As the ink composition A, an ink composition A1 was used, and as the ink composition B, ink compositions B1 and B5 to B8 were used. Using an ink jet printer PM-G920 manufactured by Seiko Epson Corporation, the ink composition B1 was filled in a photo black cartridge, the color inks of the ink compositions B5 to B7 were filled in the corresponding color cartridges, the ink composition A1 was filled in a gloss optimizer cartridge, and the ink composition B8 was filled in a matte black cartridge. A full-color image printing operation was performed under the printing conditions in which, at normal temperature and normal pressure, ink droplets of the individual colors were deposited on the corresponding positions and the ink composition A1 covered the entire image region. As a recording medium, an A4-sized OHP film (XEROX FILM frameless; manufactured by Fuji Xerox Co., Ltd.) was used. Printing and curing treatment were performed, using the ultraviolet irradiation light source placed at the paper-ejecting port, under the curing conditions in which the integrated quantity of light was 900 mJ/cm$^2$. It was confirmed that a cured film of a full-color image in which bleeding did not occur was obtained.
Table 13

| | Ink composition A1 | Ink composition B1 | Ink composition B5 | Ink composition B6 | Ink composition B7 | Ink composition B8 |
|---|---|---|---|---|---|---|
| AG | 73.6 | 70.6 | 70.6 | 70.6 | 70.6 | 70.6 |
| TPGDA | 3.0 | 3.0 | 3.0 | 3.0 | 3.0 | 3.0 |
| STAR-501 | 10.0 | 12.0 | 12.0 | 12.0 | 12.0 | 12.0 |
| Polymer Emulsion (PE 46 T) | 7.0 | 7.0 | 7.0 | 7.0 | 7.0 | 7.0 |
| Irgacure 819 | 4.0 | - | - | - | - | - |
| Irgacure 127 | 1.0 | - | - | - | - | - |
| Darocur EHA | 1.0 | 1.0 | 1.0 | 1.0 | 1.0 | 1.0 |
| Pigment | - | C. I. Pigment Bk7 6.0 | C. I. Pigment Blue 15:3 6.0 | C. I. Pigment Violet 19 6.0 | C. I. Pigment Yellow 155 6.0 | C. I. Pigment White 6 6.0 |
| BYK-3570 | 0.2 | 0.2 | 0.2 | 0.2 | 0.2 | 0.2 |
| Irgastab UV-10 | 0.2 | 0.2 | 0.2 | 0.2 | 0.2 | 0.2 |

Furthermore, a set of color ink compositions shown in Table 14 below was used. As the ink composition A, an ink composition A5 was used, and as the ink composition B, ink compositions B9 and B11 to B14 were used. Using an ink jet printer PM-G920 manufactured by Seiko Epson Corporation, the ink composition B9 was filled in a photo black cartridge, the color inks of the ink compositions B11 to B13 were filled in the corresponding color cartridges, the ink composition A5 was filled in a gloss optimizer cartridge, and the ink composition B14 was filled in a matte black cartridge. A full-color image printing operation was performed under the printing conditions in which, at normal temperature and normal pressure, ink droplets of the individual colors were deposited on the corresponding positions and the ink composition A5 covered the entire image region. As a recording medium, an A4-sized OHP film (XEROX FILM frameless; manufactured by Fuji Xerox Co., Ltd.) was used. Printing and curing treatment were performed, using the ultraviolet irradiation light source placed at the paper-ejecting port, under the curing conditions in which the integrated quantity of light was 900 mJ/cm$^2$. It was confirmed that a cured film of a full-color image in which bleeding did not occur was obtained.
Table 14

| | Ink composition A5 | Ink composition B9 | Ink composition B11 | Ink composition B12 | Ink composition B13 | Ink composition B14 |
|---|---|---|---|---|---|---|
| AG | 67.6 | 71.6 | 71.6 | 71.6 | 71.6 | 71.6 |
| Viscoat #1000 | 20.0 | 15.0 | 15.0 | 15.0 | 15.0 | 15.0 |
| Polymer emulsion | PE46 T | PE46 T | PE 46 T | PE 46 T | PE 46 T | PE 46 T |
| | 7.0 | 7.0 | 7.0 | 7.0 | 7.0 | 7.0 |
| Irgacure 819 | 4.0 | - | - | - | - | - |
| Irgacure 127 | 1.0 | - | - | - | - | - |
| Pigment | - | C. I. Pigment Bk7 | C. I. Pigment Blue 15:3 | C. I. Pigment Violet 19 | C. I. Pigment Yellow 213 | C. I. Pigment White 6 |
| | - | 6.0 | 6.0 | 6.0 | 6.0 | 6.0 |
| BYK-3570 | 0.2 | 0.2 | 0.2 | 0.2 | 0.2 | 0.2 |
| Irgastab UV-10 | 0.2 | 0.2 | 0.2 | 0.2 | 0.2 | 0.2 |

As is evident from the above, the ink composition A and the ink composition B in the two-part curable ink composition set according to each of Examples of the invention had satisfactory results in the curability and fixability evaluation, thus being usable satisfactorily.

## Claims

1. A two-part curable ink composition set comprising:

an ink composition A which contains at least a photopolymerization initiator and a polymerizable compound and which does not contain a coloring material; and
an ink composition B which contains at least a coloring material and a polymerizable compound and which does not contain a photopolymerization initiator,
wherein either one or each of the ink composition A and the ink composition B contains a resin emulsion dispersed in the polymerizable compound.

2. The two-part curable ink composition set according to Claim 1, wherein each of the ink composition A and the ink composition B does not contain water.

3. The two-part curable ink composition set according to Claim 1 or 2, wherein the resin emulsion is an emulsion of a resin having a polymerizable group.

4. The two-part curable ink composition set according to any of claims 1 to 3, wherein the ink composition A and/or the ink composition B contains, as the polymerizable compound, an allyl group-containing compound and/or an N-vinyl compound.

5. The two-part curable ink composition set according to Claim 4, wherein the amount of the allyl group-containing compound and/or the N-vinyl compound contained in the ink composition A and/or the ink composition B is in a range of 20% to 80% by weight.

6. The two-part curable ink composition set according to Claim 4 or 5, wherein the allyl group-containing compound is ethylene glycol monoallyl ether.

7. The two-part curable ink composition set according to Claim 4 or 5, wherein the N-vinyl compound is N-vinylformamide.

8. The two-part curable ink composition set according to any of claims 1 to 7, wherein the ink composition A and/or the ink composition B contains, as the polymerizable compound, a dendritic polymer.

9. The two-part curable ink composition set according to Claim 8, wherein the dendritic polymer is a dendrimer and/or a hyperbranched polymer.

10. The two-part curable ink composition set according to Claim 8 or 9, wherein the content of the dendritic polymer is 3% to 30% by weight.

11. The two-part curable ink composition set according to any of claims 1 to 10, wherein the ink composition A and/or the ink composition B contains a surfactant.

12. The two-part curable ink composition set according to Claim 11, wherein the surfactant is polyether-modified polydimethylsiloxane or polyester-modified polydimethylsiloxane.

13. The two-part curable ink composition set according to Claim 1 to 12, wherein the ink composition A and/or the ink composition B contains a polymerization accelerator.

14. The two-part curable ink composition set according to Claim 13, wherein the polymerization accelerator is at least one of an amine compound, thioxanthone, and polymerizable fine particles.

15. The two-part curable ink composition set according to Claim 1 to 14, wherein the photopolymerization initiator contained in the ink composition A is any one of $\alpha$-aminoketone, $\alpha$-hydroxyketone, and acylphosphine oxide.

16. The two-part curable ink composition set according to Claim 1 to 14, wherein the photoporimerization initiator contained in the ink composition A is a mixture of at least two of $\alpha$-aminoketone, $\alpha$-hydroxyketone, and acylphosphine oxide.

17. The two-part curable ink composition set according to Claim 1 to 16, wherein the ink composition A and/or the ink composition B contains a thermal radical polymerization inhibitor.

18. The two-part curable ink composition set according to Claim 17, wherein the thermal polymerization inhibitor is an HALS-based compound.

19. The two-part curable ink composition set according to Claim 1 to 18, wherein the coloring material contained in the ink composition B is a pigment.

20. An ink jet recording method using the two-part curable ink composition set according to Claim 1 to 19.

EP 1 942 159 A1

| | European Patent Office | EUROPEAN SEARCH REPORT | | Application Number EP 07 02 4545 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| P,X | EP 1 806 387 A (SEIKO EPSON CORP [JP]) 11 July 2007 (2007-07-11) * the whole document * ----- | 1-20 | INV. C09D11/00 C09D11/10 |
| P,X | EP 1 752 504 A (SEIKO EPSON CORP [JP]) 14 February 2007 (2007-02-14) * paragraph [0018]; claim 4; example 3 * ----- | 1-20 | |
| P,X | EP 1 837 381 A (FUJIFILM CORP [JP]) 26 September 2007 (2007-09-26) * claims; examples * ----- | 1-20 | |
| X | WO 93/21235 A (LORD CORP [US]) 28 October 1993 (1993-10-28) * claims; examples * ----- | 1-20 | |
| X | JP 2006 274029 A (SEIKO EPSON CORP) 12 October 2006 (2006-10-12) * abstract * ----- | 1-20 | |
| X | JP 2006 123529 A (SEIKO EPSON CORP) 18 May 2006 (2006-05-18) * abstract * ----- | 1-20 | TECHNICAL FIELDS SEARCHED (IPC) C09D |
| X | JP 2005 096254 A (KONICA MINOLTA MED & GRAPHIC) 14 April 2005 (2005-04-14) * abstract * ----- | 1-20 | |

The present search report has been drawn up for all claims

| Place of search | Date of completion of the search | Examiner |
|---|---|---|
| Munich | 10 April 2008 | Schmitz, Volker |

EPO FORM 1503 03.82 (P04C01)

**ANNEX TO THE EUROPEAN SEARCH REPORT
ON EUROPEAN PATENT APPLICATION NO.**

EP 07 02 4545

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2008

| Patent document cited in search report | | Publication date | Patent family member(s) | | Publication date |
|---|---|---|---|---|---|
| EP 1806387 | A | 11-07-2007 | US | 2007129457 A1 | 07-06-2007 |
| EP 1752504 | A | 14-02-2007 | CN | 1912026 A | 14-02-2007 |
| | | | JP | 2007045990 A | 22-02-2007 |
| | | | US | 2007037961 A1 | 15-02-2007 |
| EP 1837381 | A | 26-09-2007 | JP | 2007254560 A | 04-10-2007 |
| | | | US | 2007225404 A1 | 27-09-2007 |
| WO 9321235 | A | 28-10-1993 | US | 5212212 A | 18-05-1993 |
| JP 2006274029 | A | 12-10-2006 | NONE | | |
| JP 2006123529 | A | 18-05-2006 | NONE | | |
| JP 2005096254 | A | 14-04-2005 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004250659 A
- JP 2005023299 A
- JP 2005290362 A
- JP 2005314655 A
- US 4507466 A
- US 4558120 A
- US 4568737 A
- US 4587329 A
- US 4631337 A
- US 4694064 A
- US 5041516 A

**Non-patent literature cited in the description**

- *Journal of American Chemistry,* 1990, vol. 112, 7638-7647
- *Macromol. Symp.,* 1994, vol. 77, 21
- *Macromolecules,* 1996, vol. 29, 3831-3838